# DEMANDE DE BREVET EUROPEEN

(11) **EP 3 893 135 A1**
(43) Date de publication de la demande: **13.10.2021**
(21) Numéro de dépôt: 21166807.4
(22) Date de dépôt: 02.04.2021
(51) Int. Cl.: G06F 21/44, G06F 21/71

(54) **PROCÉDÉ D'AUTHENTIFICATION**

(30) Priorité: 09.04.2020 FR 2003585
(71) Demandeur: PROTON WORLD INTERNATIONAL N.V., 1831 Diegem (BE)
(72) Inventeur: MODAVE, Jean-Louis, 1340 OTTIGNIES (BE); PEETERS, Michael, 1320 TOURINNES-LA-GROSSE (BE)
(74) Mandataire: Cabinet Beaumont

(57) **Abrégé**

La présente description concerne un procédé d'authentification d'un premier dispositif (P) par un deuxième dispositif (V) au moins partiellement identique au premier dispositif (P), chaque premier, deuxième dispositif (V, P) comprenant un processeur, au moins une mémoire, et un module d'authentification, dans lequel le module d'authentification comprend un premier circuit est configuré pour interdire au processeur la lecture de données stockées dans au moins une partie de ladite mémoire, comprenant les étapes suivantes :
- le premier dispositif (P) génère une première donnée, et le deuxième dispositif (V) génère une deuxième donnée ; et
- le deuxième dispositif (V) vérifie la concordance des première et deuxième données.

## Description

### Domaine technique

La présente description concerne de façon générale les dispositifs ou circuits électroniques. La présente description s'applique de façon plus particulière à un procédé d'authentification entre deux dispositifs ou circuits électroniques précédant, par exemple, un procédé de communication principal entre ces deux dispositifs ou circuits.

### Technique antérieure

Une communication entre deux dispositifs, ou circuits, électroniques est souvent précédée d'une phase d'authentification. Pendant cette phase, un procédé d'authentification, mis en oeuvre par les deux dispositifs, permet de vérifier si les deux dispositifs sont autorisés à communiquer ensemble. Le procédé d'authentification est un premier moyen de protection contre les dispositifs malveillants essayant d'accéder à des données et/ou à des fonctionnalités d'autres dispositifs.

Un exemple de procédé d'authentification utilisé, est un procédé d'authentification de type Vérificateur/Candidat(Verifier/Prover), ou défi-réponse (Challenge/Response), entre un vérificateur et un candidat. Dans ce type de procédé d'authentification, un candidat doit transmettre, à un vérificateur, une donnée secrète, par exemple un mot de passe, pour s'authentifier. Le vérificateur est capable de vérifier si la donnée secrète est conforme pour accorder l'authentification. A titre d'exemple, le vérificateur connaît la donnée secrète, il effectue une simple comparaison avec la donnée qu'il reçoit du candidat.

Il serait souhaitable de pouvoir améliorer, au moins en partie, les procédés d'authentification connus de dispositifs électroniques.

### Résumé de l'invention

Il existe un besoin pour des procédés d'authentification plus fiables.

Il existe plus particulièrement un besoin pour des procédés d'authentification de type défi/réponse (challenge/response) entre un vérificateur et un candidat (Verifier/Prover) plus fiables.

Un mode de réalisation pallie tout ou partie des inconvénients des procédés d'authentification connus, et plus particulièrement tout ou partie des inconvénients des procédés connus d'authentification de type défi/réponse (challenge/response) entre un vérificateur et un candidat.

Un mode de réalisation prévoit un procédé d'authentification d'un premier dispositif par un deuxième dispositif au moins partiellement identiques au premier dispositif, chaque premier, deuxième dispositif comprenant un processeur, au moins une mémoire, et un module d'authentification, dans lequel le module d'authentification comprend un premier circuit configuré pour interdire au processeur la lecture de données stockées dans au moins une partie de ladite mémoire, comprenant les étapes suivantes :
- le premier dispositif génère une première donnée, et le deuxième dispositif génère une deuxième donnée ; et
- le deuxième dispositif vérifie la concordance des première et deuxième données.

Selon un mode de réalisation, le module d'authentification comprend un deuxième circuit configuré pour fournir une donnée au processeur à chaque fois que la lecture d'une donnée stockée dans au moins une partie de ladite mémoire est interdite.

Selon un mode de réalisation, le procédé d'authentification est de type Vérificateur/Candidat.

Selon un mode de réalisation, chaque premier, deuxième dispositif comprend au moins une mémoire volatile, et au moins une mémoire non volatile.

Selon un mode de réalisation, le premier circuit est configuré pour interdire au processeur la lecture de données stockées dans ladite mémoire volatile, et dans au moins une partie de ladite mémoire non volatile.

Selon un mode de réalisation, ladite au moins une partie de ladite mémoire est une partie ne stockant que des données.

Selon un mode de réalisation, le premier circuit est configuré pour interdire au processeur l'écriture de données dans une partie de ladite au moins une mémoire.

Selon un mode de réalisation, le premier circuit est configuré pour interdire au processeur l'écriture de données dans la totalité de ladite au moins une mémoire.

Selon un mode de réalisation, le premier circuit est configuré pour interdire au processeur l'exécution d'instructions stockées dans une partie de ladite au moins une mémoire.

Selon un mode de réalisation, le premier circuit est configuré pour interdire au processeur l'exécution d'instructions stockées dans ladite mémoire volatile, et dans au moins une partie de ladite mémoire non volatile.

Selon un mode de réalisation, le procédé comprend, en outre, une étape initiale de sauvegarde de l'état dans lequel est le processeur de chaque premier et deuxième dispositif.

Selon un mode de réalisation, le procédé comprend, en outre, une étape de partage d'état dans laquelle le processeur du deuxième dispositif partage son état avec le processeur du premier dispositif.

Selon un mode de réalisation, le module d'authentification génère l'état partagé pendant l'étape de partage d'état.

Selon un mode de réalisation, les processeurs des premier et deuxième dispositifs génèrent la première et la deuxième donnée en exécutant les mêmes instructions.

Selon un mode de réalisation, le module d'authentification comprend un troisième circuit configuré pour générer un signal d'interruption du procédé d'authentification.

Un autre mode de réalisation prévoit un dispositif électronique adapté à mettre en oeuvre le procédé décrit précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, schématiquement et sous forme de blocs, un mode de réalisation d'un circuit électronique ;
la figure 2 représente, schématiquement, sous forme de blocs et plus en détails, une partie du circuit de la figure 1 ; et
la figure 3 représente, sous forme de blocs, un organigramme illustrant un mode de mise en oeuvre d'un procédé d'authentification.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

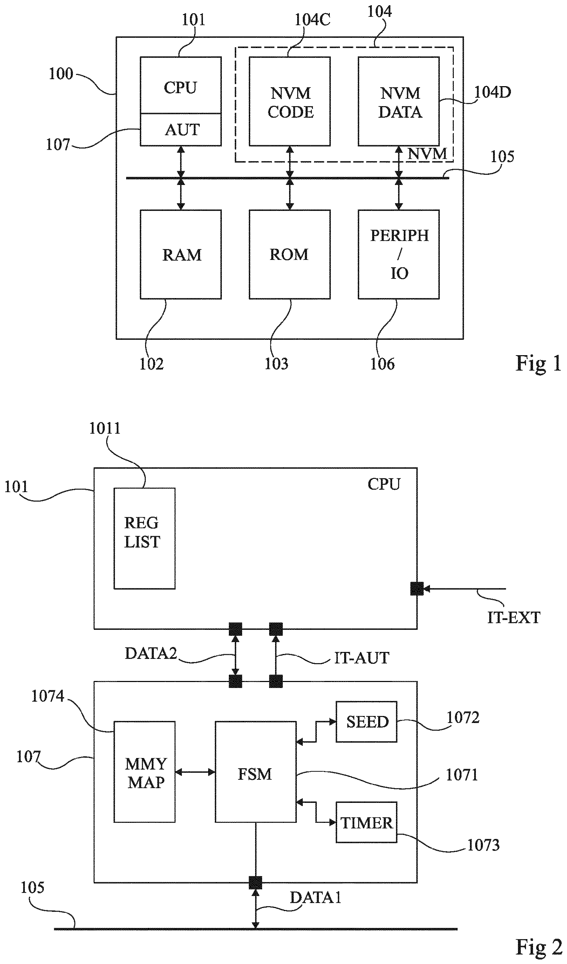

La figure 1 représente, schématiquement et sous forme de blocs, une architecture d'un mode de réalisation d'un dispositif électronique 100.

Le dispositif 100 comprend un processeur 101 (CPU) adapté à exécuter des instructions et des commandes, et à traiter des données stockées dans différentes mémoires. Le processeur 101 est décrit plus en détails en relation avec la figure 2.

Le dispositif 100 comprend, en outre, une mémoire volatile 102 (RAM) adaptée à stocker des données pendant la mise en oeuvre du dispositif 100, par exemple des données d'exécution.

Le dispositif 100 comprend, en outre, une mémoire morte 103 (ROM) adaptée à stocker des données de façon permanente. A titre d'exemple, la mémoire morte 103 stocke des données d'initialisation (boot) du dispositif 100.

Le dispositif 100 comprend, en outre, une mémoire non volatile 104 (NVM) (désignée en pointillé en figure 1) adaptée à stocker des données sur plusieurs mises en oeuvre successives du dispositif 100. La mémoire non volatile 104 est adaptée à stocker différents types d'informations. Plus particulièrement, une partie 104C (NVM CODE) de la mémoire 104 est adaptée à stocker des instructions logicielles, et une deuxième partie 104D (NVM DATA) est adaptée à stocker des données.

Le dispositif 100 comprend, en outre, un bus 105 adapté à transmettre des données entre les différents composants du dispositif 100.

Le dispositif 100 comprend, en outre, un module périphérique 106 (PERIPH/IO) adapté à mettre en oeuvre des fonctions du dispositif 100 et/ou à servir d'interface pour échanger des données et/ou des instructions avec d'autres circuits. Le module 106 peut être composé de plusieurs circuits différents adaptés chacun à mettre en oeuvre une ou plusieurs fonctions particulières.

Selon un mode de réalisation, le dispositif 100 comprend, en outre, un module d'authentification 107 (AUT). Le module d'authentification 107 est disposé entre le bus 105 et le processeur 101, de façon à faire la liaison entre le bus 105 et le processeur 101. Le module 107 est décrit plus en détails en relation avec la figure 2.

La figure 2 représente, schématiquement, sous forme de blocs, et plus en détails, le processeur 101 (CPU) et le module d'authentification 107 du dispositif 100 décrit en relation avec la figure 1.

Le processeur 101 comprend, entre autres, au moins une banque de registres 1011 (REG LIST) adaptée à stocker des données et/ou des instructions.

Le processeur 101 est adapté à recevoir des données et/ou des instructions provenant des mémoires 102, 103 et 104 transmises par le bus 105. Comme dit précédemment, le module d'authentification 107 est disposé entre le processeur 101 et le bus 105. Ainsi, les données et/ou instructions transmises par le bus 105 sont, dans un premier temps, transmises au module 107 (transmission symbolisée en figure 2 par une flèche DATA1). Dans un deuxième temps, ces données et/ou instructions sont transmises par le module 107 au processeur 101 (transmission symbolisée en figure 2 par une flèche DATA2).

Le processeur 101 est adapté à recevoir, en outre, des signaux d'interruptions IT-AUT envoyées par le module 107, et des signaux d'interruptions IT-EXT envoyées par d'autres composants du dispositif 100, par exemple, le module périphérique 106. Un signal d'interruption est une instruction indiquant au processeur 101 d'arrêter ou de mettre en pause les calculs en cours pour, par exemple, mettre en oeuvre de nouvelles instructions.

Le module d'authentification 107 comprend une machine d'états 1071 (FSM). La machine d'état 1071 est adaptée à recevoir et/ou envoyer des données avec le bus de données 105 et avec le processeur 101. Plus particulièrement, la machine d'états 1071 est adaptée à faire l'intermédiaire entre le processeur 101 et le bus de données 105.

Le module d'authentification 107 comprend, en outre, un circuit de génération de données 1072 (SEED). Le circuit de génération de données 1072 permet, par exemple, de générer une donnée aléatoire, ou de fournir une donnée stockée dans une banque de registre. Le module de génération de données 1072 est adapté à échanger des données avec la machine d'états 1071.

Le module d'authentification 107 comprend, en outre, un circuit d'interruption 1073 (TIMER). Le circuit d'interruption 1073 est configuré pour mettre fin à un procédé d'authentification du dispositif 100 en envoyant le signal d'interruption IT-AUT au processeur 101. Le circuit d'interruption 1073 est adapté à échanger des données et/ou des instructions avec la machine d'état 1071.

A titre d'exemple, le circuit d'interruption 1073 est un compteur adapté à envoyer un signal d'interruption quand il atteint un nombre seuil d'itérations. Selon un autre exemple, le circuit d'interruption 1073 est adapté à envoyer le signal d'interruption dès la réception d'une instruction particulière.

Selon une variante de réalisation, un signal d'interruption peut être généré à partir d'un code ou d'une instruction stockée dans la partie 104C de la mémoire non volatile 104. Cette instruction pourrait être la dernière instruction mise en oeuvre par le processeur pendant l'exécution du procédé d'authentification du dispositif 100. Un avantage de cette variante est qu'une telle instruction permet d'arrêter le procédé d'authentification avant la lecture involontaire d'instructions stockées dans la mémoire non volatile qui ne concerne pas le procédé d'authentification.

Le module d'authentification 107 comprend, en outre, un circuit de contrôle 1074 (MMY MAP) adapté à contrôler les échanges de données et/ou d'instructions entre le processeur 101 et le bus 105. Pour cela, le circuit de contrôle 1074 est adapté à échanger des données et/ou des instructions avec la machine d'états 1071. Selon un mode de réalisation, le circuit de contrôle 1074 est adapté à contrôler, par exemple à filtrer, les données et/ou les instructions échangées entre le processeur 101 et le bus 105, par exemple, sur la base de leur nature et/ou de leur provenance.

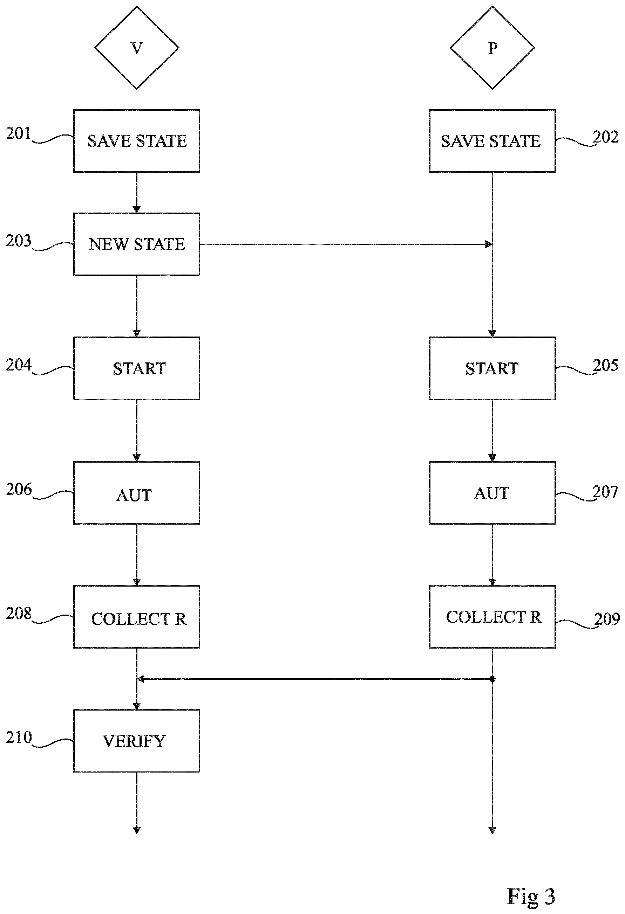

Selon un mode de réalisation, le circuit de contrôle 1074 est, plus particulièrement, adapté à filtrer les données et/ou les instructions provenant du bus 105 pendant la mise en oeuvre d'un procédé d'authentification du dispositif 100. Un tel procédé est décrit en relation avec la figure 3. Plus particulièrement, pendant la mise en oeuvre dudit procédé d'authentification du dispositif 100, le circuit de contrôle 1074 est adapté à déterminer quelles données le processeur peut lire, quelles données le processeur peut écrire, et quelles instructions le processeur peut mettre en oeuvre.

Selon un mode de réalisation, pendant le procédé d'authentification, le processeur 101 est autorisé à lire des données provenant de la mémoire morte 103 et de la partie 104C stockant des commandes et des instructions de la mémoire non volatile 104, mais il lui est interdit de lire des données provenant des autres mémoires du dispositif 100, c'est-à-dire de la mémoire volatile 102, de la partie 104D stockant des données de la mémoire non volatile 104, et du module périphérique 106. A titre d'exemple, lorsque le processeur 101 reçoit une donnée d'une mémoire, ou d'une partie d'une mémoire, dont il ne peut effectuer la lecture, le circuit de génération de données 1072 fournit une donnée de remplacement.

Selon un mode de réalisation, pendant le procédé d'authentification, le processeur 101 ne peut écrire de données dans aucune des mémoires du dispositif 100. Ainsi, les données stockées dans les mémoires 102, 103 et 104 ne sont pas corrompues par des données utilisées uniquement pour le procédé d'authentification, ou alors des données secrètes d'authentification ne sont pas stockées dans les mémoires 102, 103 et 104. Selon une variante de réalisation, le processeur 101 peut être autorisé à écrire des données dans une partie d'une des mémoires du dispositif 100, par exemple, dans une partie de la mémoire volatile 102.

Selon un mode de réalisation, pendant le procédé d'authentification, le processeur 101 est autorisé à recevoir et à mettre en oeuvre des instructions provenant de la mémoire morte 104 et de la partie 104C stockant les commandes et instructions de la mémoire non volatile 104, mais il lui est interdit de recevoir et de mettre en oeuvre des instructions provenant de la mémoire volatile 102, de la partie 104D de la mémoire non volatile 104, et du module périphérique 106. A titre d'exemple, le circuit de contrôle 1074 empêche, en outre, la prise en compte de tous les signaux d'interruptions provenant de la mémoire volatile 102, de la partie 104D de la mémoire non volatile 104, et du module périphérique 106.

Le fonctionnement du module d'authentification 107 est le suivant. Pendant la mise en oeuvre d'un procédé d'authentification de type Vérificateur/Candidat, le processeur 101 du dispositif 100 exécute une série d'instructions lui permettant de produire une donnée secrète. Quand le dispositif 100 tient le rôle de vérificateur, la donnée secrète permet de vérifier la donnée secrète provenant d'un dispositif candidat. Quand le dispositif 100 tient le rôle de candidat, cette donnée secrète produite est envoyée à un dispositif vérificateur. Le module d'authentification 107 permet, pendant l'exécution de ces instructions, de sélectionner les instructions que le processeur 101 peut mettre en oeuvre, et les données que le processeur 101 peut lire et/ou écrire. Lorsqu'une instruction demande la lecture d'une donnée dans une partie de mémoire à laquelle le processeur 101 n'a pas accès, le circuit de génération de données 1072 remplace la donnée à lire par une autre donnée, par exemple une donnée aléatoire. Le module d'authentification permet, en outre, de mettre fin au procédé d'authentification en envoyant un signal d'interruption au processeur 101.

La figure 3 est un organigramme illustrant des étapes d'un mode de mise en oeuvre d'un procédé d'authentification d'un dispositif P, du type du dispositif 100 décrit en relation avec les figures 1 et 2, par un dispositif V également du type du dispositif 100 décrit en relation avec les figures 1 et 2.

Les deux dispositifs V et P sont des dispositifs au moins partiellement identiques, c'est-à-dire qu'ils sont composés d'au moins un ensemble de composants électroniques communs, connectés et agencés de même manière, et qu'ils mettent en oeuvre au moins certains un ou plusieurs logiciels semblables ou identiques. A titre d'exemple, les dispositifs V et P sont identiques. A titre d'exemple, les dispositifs V et P sont des circuits provenant d'une même chaîne de production.

Le procédé d'authentification mis en oeuvre ici est un procédé de type Vérificateur/Candidat dans lequel le dispositif V tient le rôle de vérificateur, et le dispositif P tient le rôle de candidat. Les dispositifs V et P étant identiques, les rôles de vérificateur et de candidat peuvent être intervertis à chaque nouvelle mise en oeuvre du procédé d'authentification.

La mise en oeuvre du procédé d'authentification du dispositif P par le dispositif V est la suivante.

A des étapes 201 et 202 simultanées, illustrées par des blocs SAVE STATE, les dispositifs V et P enregistrent, ou sauvegardent, l'état dans lequel est leur processeur. Plus précisément, l'instruction dont l'exécution est en cours et les données traitées par le processeur du dispositif V, respectivement du dispositif P, sont stockées dans une partie d'une mémoire du dispositif V, respectivement dispositif P, par exemple, dans sa mémoire volatile.

A une étape 203, illustrée par un bloc NEW STATE, le dispositif V initialise l'état de son processeur, et partage cet état au dispositif P de façon que les deux dispositifs V et P soient dans le même état.

Pour cela, le module d'authentification du dispositif V utilise son module de génération de données pour générer une donnée S. Le module d'authentification définit, en outre, par l'intermédiaire de son circuit d'interruption, le moment de fin du procédé d'authentification par l'intermédiaire d'une donnée N. A titre d'exemple, lorsque le circuit d'interruption est un compteur, le module d'authentification définit un nombre d'itérations, et la donnée N est le nombre maximal d'itérations. De son côté, le processeur du dispositif V génère une donnée, ou une série de données, de contexte C. Le processeur définit, en outre, une adresse A à laquelle démarrer les instructions à exécuter pendant le procédé d'authentification.

Le dispositif V transfère au dispositif P les données S, N, et C, et l'adresse A. Ainsi, le dispositif P peut modifier l'état de son processeur pour le mettre dans le même état que le processeur du dispositif V.

A des étapes 204 et 205 simultanées, illustrées par des blocs START, les dispositifs V et P démarrent chacun leur module d'authentification pour indiquer à leur processeur de débuter la mise en oeuvre d'instructions. Chaque processeur démarre alors les instructions à l'adresse A en utilisant la donnée S et la donnée, ou la série de données, de contexte C. Plus précisément, chaque processeur commence à exécuter une série d'instructions stockées à l'adresse A et applique ces instructions, ou calculs, aux données S et C. Le résultat de ces calculs est la donnée à vérifier.

A des étapes 206 et 207 simultanées, illustrées par des blocs AUT, les processeurs des dispositifs V et P effectuent la série d'instructions jusqu'à ce que le circuit d'interruption du module d'authentification envoie une interruption. Selon un exemple, les processeurs peuvent effectuer les mêmes instructions sur plusieurs itérations, et, si les modules d'interruption des dispositifs V et P sont des compteurs, les signaux d'interruptions de ces modules sont envoyés une fois que le nombre d'itérations a dépassé le seuil défini par la donnée N.

Pendant ces étapes, les processeurs des dispositifs V et P ne sont pas adaptés à prendre en compte des signaux d'interruptions IT-EXT envoyés par d'autres composants des dispositifs V et P.

A des étapes 208 et 209, illustrées par les blocs COLLECT R, les dispositifs V et P récupèrent la dernière donnée résultat, notée donnée R, obtenue par les calculs réalisés lors de la mise en oeuvre des instructions par leurs processeurs respectifs.

Le dispositif P envoie, ensuite, sa donnée résultat au dispositif V.

Selon une variante de réalisation, le dispositif P peut mettre en oeuvre une étape intermédiaire de chiffrement de la donnée R permettant d'envoyer une donnée chiffrée au dispositif V. Dans ce cas, le dispositif V, peut mettre en oeuvre une étape de déchiffrement après réception de la donnée R du dispositif P.

A une étape 210 (VERIFY), le dispositif V vérifie si la donnée R reçue de la part du dispositif P est la même que celle qu'il a obtenue. Pour cela, le dispositif V utilise une fonction de vérification. La fonction de vérification prend, en entrée, la donnée R obtenue par le dispositif V et la donnée R obtenue par le dispositif P, et fournit, en sortie, une information représentative du résultat de l'authentification, par exemple, un drapeau comprenant un état Vrai et un état Faux. L'état Vrai signifie que l'authentification a fonctionné et l'état Faux signifie l'inverse.

Une étape finale (non représentée en figure 3) du procédé peut être une étape de restauration de l'état des processeurs des dispositifs P et V sauvegardé aux étapes 201 et 202, permettant aux dispositifs P et V de reprendre là ou ils en étaient avant le procédé d'authentification.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé d'authentification d'un premier dispositif (P) par un deuxième dispositif (V) au moins partiellement identique au premier dispositif (P), chaque premier, deuxième dispositif (V, P) comprenant un processeur (101), au moins une mémoire (102, 104), et un module d'authentification (107), dans lequel le module d'authentification comprend un premier circuit (1074) configuré pour interdire au processeur (101) la lecture de données stockées dans au moins une partie de ladite mémoire, comprenant les étapes suivantes :
- le premier dispositif (P) génère une première donnée, et le deuxième dispositif (V) génère une deuxième donnée ; et
- le deuxième dispositif (V) vérifie la concordance des première et deuxième données.

2. Procédé selon la revendication 1, dans lequel le module d'authentification (107) comprend un deuxième circuit (1072) configuré pour fournir une donnée au processeur (101) à chaque fois que la lecture d'une donnée stockée dans au moins une partie de ladite mémoire est interdite.

3. Procédé selon la revendication 1 ou 2, le procédé étant de type Vérificateur/Candidat.

4. Procédé selon l'une quelconque des revendications 1 à 3, dans lequel chaque premier, deuxième dispositif (V, P) comprend au moins une mémoire volatile (102), et au moins une mémoire non volatile (104).

5. Procédé selon la revendication 4, dans lequel le premier circuit (1074) est configuré pour interdire au processeur (101) la lecture de données stockées dans ladite mémoire volatile (102), et dans au moins une partie (104D) de ladite mémoire non volatile (104).

6. Procédé selon la revendication 5, dans lequel ladite au moins une partie de ladite mémoire (104) est une partie (104D) ne stockant que des données.

7. Procédé selon l'une quelconque des revendications 1 à 6, dans lequel le premier circuit (1074) est configuré pour interdire au processeur (101) l'écriture de données dans une partie de ladite au moins une mémoire (102, 103, 104).

8. Procédé selon l'une quelconque des revendications 1 à 6, dans lequel le premier circuit (1074) est configuré pour interdire au processeur (101) l'écriture de données dans la totalité de ladite au moins une mémoire (102, 103, 104).

9. Procédé selon l'une quelconque des revendications 1 à 8, dans lequel le premier circuit (1074) est configuré pour interdire au processeur (101) l'exécution d'instructions stockées dans une partie de ladite au moins une mémoire (102, 103, 104).

10. Procédé selon la revendication 9 dans son rattachement à la revendication 4, dans lequel le premier circuit (1074) est configuré pour interdire au processeur (101) l'exécution d'instructions stockées dans ladite mémoire volatile (102), et dans au moins une partie (104D) de ladite mémoire non volatile (104).

11. Procédé selon l'une quelconque des revendications 1 à 10, comprenant, en outre, une étape initiale de sauvegarde de l'état dans lequel est le processeur de chaque premier et deuxième dispositif (V, P).

12. Procédé selon l'une quelconque des revendications 1 à 11, comprenant, en outre, une étape de partage d'état dans laquelle le processeur du deuxième dispositif (V) partage son état avec le processeur du premier dispositif (P).

13. Procédé selon la revendication 12, dans lequel le module d'authentification (107) génère l'état partagé pendant l'étape de partage d'état.

14. Procédé selon l'une quelconque des revendications 1 à 13, dans lequel les processeurs des premier et deuxième dispositifs (V, P) génèrent la première et la deuxième donnée en exécutant les mêmes instructions.

15. Procédé selon l'une quelconque des revendications 1 à 14, dans lequel le module d'authentification comprend un troisième circuit (1073) configuré pour générer un signal d'interruption du procédé d'authentification.

16. Dispositif électronique adapté à mettre en oeuvre le procédé selon l'une quelconque des revendications 1 à 15.
